# EUROPEAN PATENT APPLICATION

(11) **EP 4 755 699 A1**
(43) Date of publication of application: **10.06.2026**
(21) Application number: 24217309.4
(22) Date of filing: 03.12.2024
(51) Int. Cl.: B60L 53/122, B60L 53/22, H02J 50/00, H02M 7/00

(54) **PRE-CHARGE OF FLYING CAPACITOR CONVERTERS**

(71) Applicant: WiTricity AI Tech, LLC, Stuart, FL 34997 (US)
(72) Inventor: LE, Nam Hoai, Midway, 31320 (US)
(74) Representative: HG Law International LLP

(57) **Abstract**

A pre-charge sequence for a flying capacitor converter of a wireless power system is disclosed. An example method includes determining that a ground assembly of the system is connected to an electric grid and is not receiving power. The ground assembly comprises (1) a first switch leg comprising first, second, third, and fourth switches connected in series between first and second voltage source terminals, (2) a flying capacitor connected at a first node between the first and second switches and at a second node between the third and fourth switches, and (3) a DC link capacitor. The method includes executing a flying capacitor pre-charge sequence comprising: switching on the first and fourth switches; determining that the flying capacitor has reached a threshold voltage; and in response, switching off the first and fourth switches.

## Description

### Background

Wireless power transfer (WPT) for charging electric vehicles is described in detail in patents such as U.S. Patents 8,933,594, titled "Wireless energy transfer for vehicles," and 9,561,730, titled "Wireless power transmission in electric vehicles," which are incorporated here by reference in their entirety. More specifically, these patents refer to inductive WPT between a ground-based unit of a wireless charging station and a vehicle-based unit, herein also simply referred to as the ground unit or ground assembly and the vehicle unit or vehicle assembly, respectively.

Efficient and regulatory compliant WPT for electric vehicles requires a WPT coil in the vehicle unit to be aligned with a WPT coil in the ground unit within a specified tolerance zone. Some standards specify a tolerance zone of +/- 75 mm in x-direction (vehicle longitudinal axis) and +/- 100 mm in y-direction (vehicle lateral axis). Therefore, one aspect of WPT for charging electric vehicles to be addressed is assisting a user or an autonomous driving system to park and align the vehicle within the relatively tight tolerance zone sometimes also referred to as "charging spot." Such park assist systems may also include guidance of the user or the autonomous driving system in steering the vehicle towards the ground unit.

A further aspect of WPT for electric vehicle charging is establishing wireless communications between the vehicle and the wireless charging station the vehicle is attempting to use for charging. Standard compliant WPT for electric vehicles requires the wireless charging station to communicate with the vehicle via a wireless communication network for purposes of WPT system control and other WPT-related functions (e.g., for the safety of the system). This communication is based on WiFi IEEE 802.11x using standardized protocols enabling interoperability. Establishing wireless communications may be particularly difficult in a parking facility with multiple wireless charging stations at which multiple EVs may be attempting to park at the same time. It is necessary to disambiguate the connections - that is, make sure that each vehicle is in communication with the wireless charging station it is attempting to use for charging, and not another e.g., neighboring station. This disambiguation is part of a process referred to as pairing and shall ensure that a wireless communication node (e.g., a WiFi client) associated to the vehicle communicates with a wireless communication node (e.g., a WiFi access point) associated to the right wireless charging station.

### Summary

WPT systems typically use electromagnetic fields to transmit electrical energy between a wireless power transmitter and a wireless power receiver, without the need for a physical connection. In order to properly transfer power from the transmitter to the receiver, and in order to properly charge a connected battery or power a connected device, the wireless power transmitter and/or receiver may include one or more switching legs that enable the system to convert between AC and DC power, from one voltage to another, and/or otherwise enable the system to operate effectively.

An example inverter architecture that may be used within a wireless power transmitter and/or a wireless power receiver is a flying capacitor converter. A flying capacitor converter may be a multi-level inverter, in which the "flying capacitor" is able to float to different electric potentials depending on the connected switch configuration, thereby helping to balance out voltage level differences due to manufacturing tolerances, temperature variations, and more. One function of the flying capacitor is to store and transfer energy between different levels of the inverter, using multiple capacitors connected in series and parallel to produce a desired voltage level.

Multi-level converters provide numerous benefits for the WPT system such as wide soft switching ranges and lower emissions. And among the multiple possible converter topologies that may be used, flying capacitor converters provide the best tradeoff by providing low cost in semiconductors, the same derating among all devices, and low emissions.

However, to operate a flying capacitor converter, the flying capacitor may benefit from being pre-charged before nominal operation can begin. If the converter is off (e.g., all the switches are off) and there is no additional circuitry connected to the flying capacitor, the flying capacitor cannot be pre-charged and the system may not operate.

To address this issue, one approach includes using a resistor pre-charge circuit. In such an arrangement, the flying capacitor is connected to a power source via the resistor pre-charge circuit to pre-charge the flying capacitor prior to nominal operation of the converter. However, this approach includes a tradeoff between the speed at which the flying capacitor is pre-charged, and the losses introduced by the resistors of the resistor pre-charge circuit.

Another approach includes a resistor connected in parallel with a switch to form a resistive switch circuit. The resistive switch circuit may be connected in series with the flying capacitor. The resistive switch circuit may connect the resistor to the flying capacitor during pre-charging, and disconnect the resistor from the flying capacitor after pre-charging and during nominal operation of the converter. However, this approach requires additional components, and introduces additional potential sources of failure that must be considered during design and operation of the converter.

Embodiments of the present disclosure address these problems and others by using the controller of the flying capacitor converter to sequence the transitions of the converter switches to pre-charge the flying capacitor along with or simultaneously with the DC link capacitor. The DC link capacitor may be included in the converter to provide a more stable output voltage by limiting fluctuations as the converter sporadically demands higher current. In some embodiments, the DC link capacitor may have a higher capacitance than the flying capacitor, thereby requiring a longer time to charge. To pre-charge the converter (e.g., the flying capacitor and the DC link capacitor), the controller may transition the appropriate switches of the converter to connect the flying capacitor and DC link capacitor in parallel to a power source. Once the flying capacitor is charged, and the DC link capacitor is partially charged, the controller turns off the appropriate switches to continue charging the DC link capacitor on its own. The converter can then operate nominally. This process does not require additional components to switch on or off a series resistor as in other approaches, thereby providing a simplified solution that requires fewer components, lower cost, and fewer sources of failure.

One embodiment includes an example method for operating an electric vehicle charging system comprising a ground assembly and a vehicle assembly. The example method comprises determining that the ground assembly is connected to an electric grid and is not receiving power from the electric grid. This may occur in the event of a blackout or other electrical disruption. The method may then include executing a flying capacitor pre-charge sequence for the ground assembly, wherein the ground assembly comprises (1) a first switch leg comprising first, second, third, and fourth switches, wherein the first, second, third and fourth switches are connected in series between first and second voltage source terminals, (2) a flying capacitor, wherein a first terminal of the flying capacitor is connected at a first node between the first switch and the second switch and a second terminal of the flying capacitor is connected at a second node between the third switch and the fourth switch, and (3) a DC link capacitor connected in parallel to the first switch leg between the first and second voltage source terminals. The flying capacitor pre-charge sequence may comprise switching on the first and fourth switches to connect the flying capacitor to the first and second voltage source terminals in parallel with the DC link capacitor; determining that the flying capacitor has reached a threshold voltage; and in response to determining that the flying capacitor has reached the threshold voltage, switching off the first and fourth switches. In some embodiments, the flying capacitor pre-charge sequence further comprises switching off the first and fourth switches while the DC link capacitor remains connected between the first and second voltage source terminals.

In some embodiments, the first and second voltage source terminals are connected to an auxiliary power supply. In some embodiments, the first and second voltage source terminals are wirelessly connected to a power supply of the vehicle assembly. And further, in some embodiment, the power supply of the vehicle assembly is a vehicle battery.

In some embodiments, the first switch is connected to the first voltage terminal, the fourth switch is connected to the second voltage source terminal, and the second and third switches are connected in series between the first and fourth switches.

In some embodiments, the flying capacitor pre-charge sequence further comprises determining that the flying capacitor has reached the threshold voltage based on sensor data from one or more sensors.

In some embodiments, the ground assembly further comprises a plurality of switch legs, each switch leg of the plurality of switch legs comprising (1) a respective first, second, third, and fourth switch and (2) a respective flying capacitor. In these embodiments, the flying capacitor pre-charge sequence may further comprise switching on the respective first and fourth switches of each of the plurality of switch legs; determining that the respective flying capacitors of each of the plurality of switch legs have reached the threshold voltage; and in response to determining that each of the respective he flying capacitors of the plurality of switch legs have reached the threshold voltage, switching off the respective first and fourth switches of each of the plurality of switch legs.

In some embodiments, the first, second, third, and fourth switches each comprise a metal oxide semiconductor field effect transistor.

In another embodiment, a wireless power system for electric vehicle charging is described. The wireless power system may comprise a vehicle assembly and a ground assembly. The ground assembly may comprise a first switch leg comprising first, second, third, and fourth switches, wherein the first, second, third and fourth switches are connected in series between first and second voltage source terminals. The ground assembly may also comprise a flying capacitor, wherein a first terminal of the flying capacitor is connected at a first node between the first switch and the second switch, and a second terminal of the flying capacitor is connected at a second node between the third switch and the fourth switch. The ground assembly may further comprise a DC link capacitor connected in parallel to the first switch leg between the first and second voltage source terminals; and a controller for controlling the ground assembly to execute a flying capacitor pre-charge sequence. The controller may be configured to switch on the first and fourth switches to connect the flying capacitor to the first and second voltage source terminals in parallel with the DC link capacitor; determine that the flying capacitor has reached a threshold voltage; and in response to determining that the flying capacitor has reached the threshold voltage, switch off the first and fourth switches while the DC link capacitor remains connected between the first and second voltage source terminals.

In another embodiment, a method of operation a vehicle assembly of a wireless charging system is described. The method includes determining that a ground assembly is connected to an electric grid and is not receiving power from the electric grid. The method further includes executing a flying capacitor pre-charge sequence for the vehicle assembly, wherein the vehicle assembly comprises (1) a first switch leg comprising first, second, third, and fourth switches, wherein the first, second, third and fourth switches are connected in series between first and second voltage source terminals, (2) a flying capacitor, wherein a first terminal of the flying capacitor is connected at a first node between the first switch and the second switch and a second terminal of the flying capacitor is connected at a second node between the third switch and the fourth switch, and (3) a DC link capacitor connected in parallel to the first switch leg between the first and second voltage source terminals. The flying capacitor pre-charge sequence comprises: switching on the first and fourth switches to connect the flying capacitor to the first and second voltage source terminals in parallel with the DC link capacitor; determining that the flying capacitor has reached a threshold voltage; and in response to determining that the flying capacitor has reached the threshold voltage, switching off the first and fourth switches.

In another embodiment, a vehicle assembly for a wireless power transfer system is described. The vehicle assembly includes a first switch leg comprising first, second, third, and fourth switches, wherein the first, second, third and fourth switches are connected in series between first and second voltage source terminals. The vehicle assembly also includes a flying capacitor, wherein a first terminal of the flying capacitor is connected at a first node between the first switch and the second switch and a second terminal of the flying capacitor is connected at a second node between the third switch and the fourth switch. The vehicle assembly further includes a DC link capacitor connected in parallel to the first switch leg between the first and second voltage source terminals. The vehicle assembly still further includes a controller for controlling the vehicle assembly to execute a flying capacitor pre-charge sequence, wherein the controller is configured to: switch on the first and fourth switches to connect the flying capacitor to the first and second voltage source terminals in parallel with the DC link capacitor; determine that the flying capacitor has reached a threshold voltage; and in response to determining that the flying capacitor has reached the threshold voltage, switch off the first and fourth switches while the DC link capacitor remains connected between the first and second voltage source terminals.

In another embodiment, a method for operating a ground assembly of a wireless charging system is described. The method includes determining that the ground assembly is connected to an electric grid and is not receiving power from the electric grid. The method also includes executing a flying capacitor pre-charge sequence for the ground assembly, wherein the ground assembly comprises (1) a first switch leg comprising first, second, third, and fourth switches, wherein the first, second, third and fourth switches are connected in series between first and second voltage source terminals, (2) a flying capacitor, wherein a first terminal of the flying capacitor is connected at a first node between the first switch and the second switch and a second terminal of the flying capacitor is connected at a second node between the third switch and the fourth switch, and (3) a DC link capacitor connected in parallel to the first switch leg between the first and second voltage source terminals. The flying capacitor pre-charge sequence comprises: switching on the first and fourth switches to connect the flying capacitor to the first and second voltage source terminals in parallel with the DC link capacitor; determining that the flying capacitor has reached a threshold voltage; and in response to determining that the flying capacitor has reached the threshold voltage, switching off the first and fourth switches.

In another embodiment, a ground assembly for a wireless power transfer system is described. The ground assembly includes a first switch leg comprising first, second, third, and fourth switches, wherein the first, second, third and fourth switches are connected in series between first and second voltage source terminals. The ground assembly also includes a flying capacitor, wherein a first terminal of the flying capacitor is connected at a first node between the first switch and the second switch and a second terminal of the flying capacitor is connected at a second node between the third switch and the fourth switch. The ground assembly further includes a DC link capacitor connected in parallel to the first switch leg between the first and second voltage source terminals. And the ground assembly still further includes a controller for controlling the ground assembly to execute a flying capacitor pre-charge sequence, wherein the controller is configured to: switch on the first and fourth switches to connect the flying capacitor to the first and second voltage source terminals in parallel with the DC link capacitor; determine that the flying capacitor has reached a threshold voltage; and in response to determining that the flying capacitor has reached the threshold voltage, switch off the first and fourth switches while the DC link capacitor remains connected between the first and second voltage source terminals.

### Brief Description of the Drawings

The above and other objects and advantages of the disclosure will be apparent upon consideration of the following detailed description, taken in conjunction with the accompanying drawings, in which:
FIG. 1 illustrates an example parking facility with multiple wireless charging stations for use by electric vehicles in accordance with systems and methods of the present disclosure.
FIG. 2A illustrates a block diagram of an example wireless power transfer system, in accordance with some embodiments of the disclosure;
FIG. 2B illustrates a hierarchical block diagram of an example wireless power transfer system for wireless electric vehicle charging, in accordance with some embodiments of the disclosure;
FIG. 3 illustrates a first schematic diagram of a portion of a wireless power receiver in a wireless power transfer system, along with a simplified version of the first schematic diagram under particular circumstances, in accordance with some embodiments of the disclosure;
FIG. 4 illustrates a flow chart of an example process for pre-charging a flying capacitor in a wireless power converter, in accordance with some embodiments of the disclosure;
FIG. 5 illustrates a second schematic diagram of a portion of a wireless power receiver in a wireless power transfer system, along with a simplified version of the second schematic diagram under particular circumstances, in accordance with some embodiments of the disclosure;
FIG. 6 illustrates a third schematic diagram of a portion of a wireless power receiver in a wireless power transfer system, in accordance with some embodiments of the disclosure; and
FIG. 7 illustrates a fourth schematic diagram of a portion of a wireless power receiver in a wireless power transfer system, in accordance with some embodiments of the disclosure.

### Detailed Description

As noted above, example systems, methods, and apparatuses of the present disclosure may make use of a sequence controlling the state of the switches in a flying capacitor converter in order to pre-charge the flying capacitor. The disclosed methods, systems, and apparatuses may make use of existing components in the flying capacitor converter, allowing for improved functionality without requiring additional components or reducing WPT efficiency.

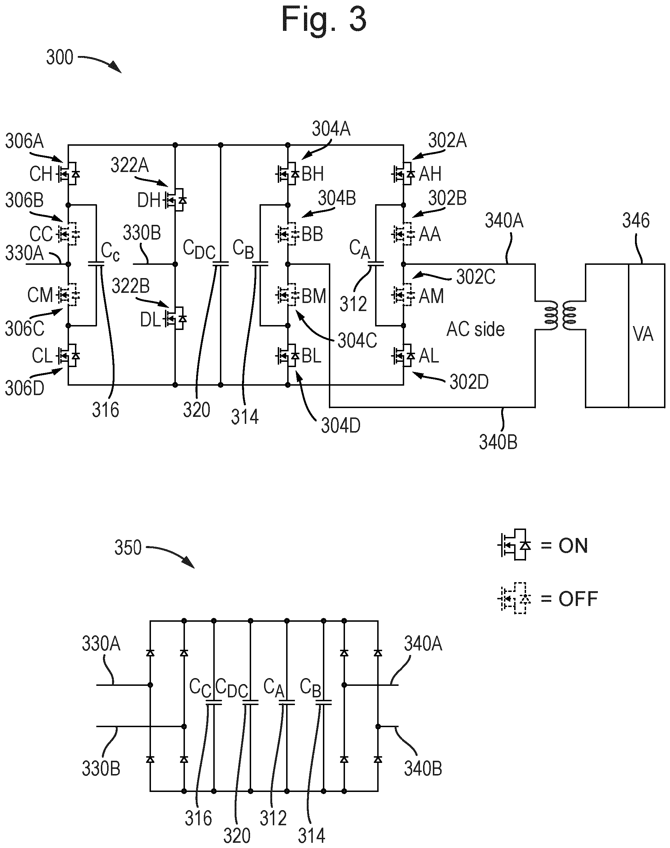

A flying capacitor converter may be a multi-level converter, in which the "flying capacitor" is able to float to different electric potentials depending on the states or configuration of switches, thereby helping to balance out voltage level differences due to manufacturing tolerances, temperature variations, and more. As illustrated and described further below with respect to FIG. 3, a flying capacitor may be connected between pairs of switches on a switch leg. The flying capacitor may act to store and transfer energy between different levels of the converter. The flying capacitor converter circuit has bidirectional power flow, and as a result, may operate as an inverter or a rectifier depending on which direction power is desired to flow.

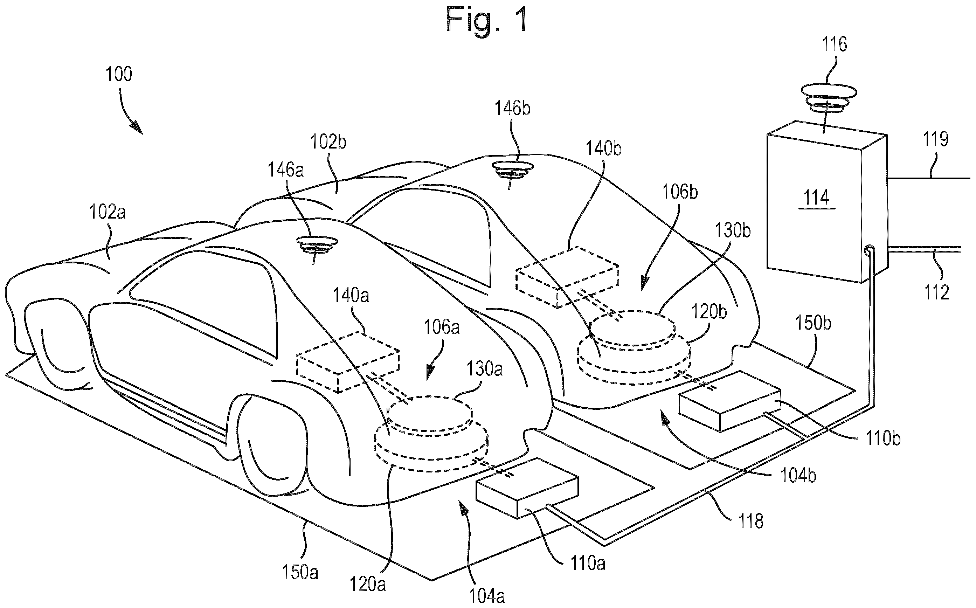

FIG. 1 illustrates an example of a parking facility 100 providing wireless charging services in parking spots 150a and 150b, including a plurality of WPT systems suitable for use in systems and methods of the present disclosure. Two wireless charging-enabled vehicles, 102a, 102b integrating WPT vehicle units 130a, 130b are each parked over a WPT ground unit, 120a, 120b. Both vehicle unit and ground unit include a WPT coil (not shown) sometimes also referred to as an induction coil configured to wirelessly transfer power based on the Faraday induction principle. Both vehicle unit and ground unit also include respective portions of a position detection system. In some implementations, the ground units are surface mounted on the floor. In other implementations, the ground units are flush mount with the floor or buried in the ground (e.g., in the asphalt). The power converters 110a, 110b convert power received by WPT vehicle units 130a, 130b to a form suitable for charging the vehicle's traction battery (not shown). In some examples and as described in U.S. Patent US 9,561,730 B2, the power converters 140a, 140b may be integrated with power converters used for plug-in charging of the vehicle, commonly called on-board chargers (OBC), or other on-board vehicle components. The WPT ground units 120a, 120b are shown linked to external power converters 110a, 110b, each connected to a power supply bus 118. In some implementations, the power converters 110a, 110b are configured and mounted as a "wall box." In other implementations, the power converters or parts thereof are integrated into the WPT ground units. The power supply bus 118 is in turn connected to a central power distribution unit 114. In some implementations and operations, the central power distribution unit 114 receives power from a power utility 112 sometimes referred to as "power grid" and provides DC power to the bus 118, and the power converters 1 10a, 110b are inverters, such as the multi-level inverter described in provisional U.S. Application 18/486,830, filed October 13, 2023, and incorporated here by reference. The power converters 110a, 110b, provide low-frequency (LF) power signals, such as the 85 kHz signals used for WPT according to the SAE J2954 standard, to the WPT ground units 120a, 120b, to turn into LF magnetic fields for WPT. In other examples, the power distribution unit 114 provides the LF signals directly to each WPT ground unit, and power converters 1 10a, 110b are simpler or not present. In yet other examples, the power distribution unit 114 and bus 118 are not present, and the power converters 110a, 110b are each connected directly to the power utility 112 and convert AC power from the utility to LF power for wireless power transfer. The combination of a WPT ground unit (e.g., 120a), a power converter (e.g., 110a), and any other ground-side electronics (not shown) constitutes a wireless charging station (e.g., 104a) as indicated in FIG. 1. In some cases, the WPT ground units 120a, 120b are also referred to as Ground Assembly Resonators (GAR) or ground assembly pads, and the wireless charging station is also referred to as a Ground Assembly (GA) or Electric Vehicle Supply Equipment (EVSE). Analogously, the WPT vehicle units 130a, 130b are sometimes referred to as Vehicle Assembly Resonators (VAR) or vehicle assembly pads and the combination of a WPT vehicle unit (e.g., 130a) and a power converter (e.g., 140a) and any other vehicle-side electronics (not shown) constitutes a Vehicle Assembly (VA) (e.g., 106a, 106b). Each of the power connections shown may be bi-directional, allowing the vehicles to discharge power from their batteries to the power utility 112 in a vehicle-to-grid (V2G), or other load in a vehicle-to-home (V2H), vehicle-to-vehicle (V2V) or similar arrangement (generally V2X).

FIG. 1 also illustrates vehicles 102a, 102b, and power distribution unit 114 providing wireless communication units 146a, 146b, and 116, respectively. The wireless communication unit 116 may be configured to wirelessly communicate with the vehicles 102a and 102b e.g., based on a Wi-Fi IEEE 802.1 1x standard. In SAE standard conformant wireless charging systems, this communication is used for exchanging data between the GA and VA for purposes of WPT control and safety. Further, the power distribution unit 114 provides an interface 119 configured to communicate with external entities (e.g., a charging operation center) via a communication backhaul (not shown). This backhaul may rely on radio communications (e.g., via communication unit 116), power line communications (e.g., via power utility 112), or any other line communications including fiber optical. In the example parking facility 100, wireless communication unit 116 is configured to serve multiple vehicles. In other parking facilities, each of the wireless charging stations 104a, 104b provide a wireless communication unit (not shown) configured to communicate with the respective vehicles 102a, 102b.

Beside the WPT coil, the WPT ground units 120a, 120b or the WPT vehicle units 130a, 130b, or both may include various sensors and detection systems (not shown). For example, they may include systems for detecting a positional relationship between the vehicle unit and the ground unit. The positional relationship is needed to guide the vehicle to the charging spot, to mutually align the vehicle-side and groundside WPT coils within the specified tolerance, and for pairing of a vehicle with a wireless charging station as needed to establish communication between the right entities in multiple vehicle multiple charging station scenarios. The ground unit may also include sensors and detection systems to determine presence of a foreign object that has the potential to heat up by induction heating or any hazardous events caused by an incandescent object on the surface of the ground unit. Further, it may include sensors and a detection system for determining presence of a living object e.g., a hand of a person or animals approaching a critical space beneath the vehicle where electromagnetic field exposure exceeds certain limits (e.g., based on IEEE or ICNIRP guidelines). Moreover, the ground unit may include sensors and a detection system for determining a presence of the vehicle or a type of the vehicle. In some implementations, sensors and detection systems or parts thereof may be external to the ground unit or vehicle unit.

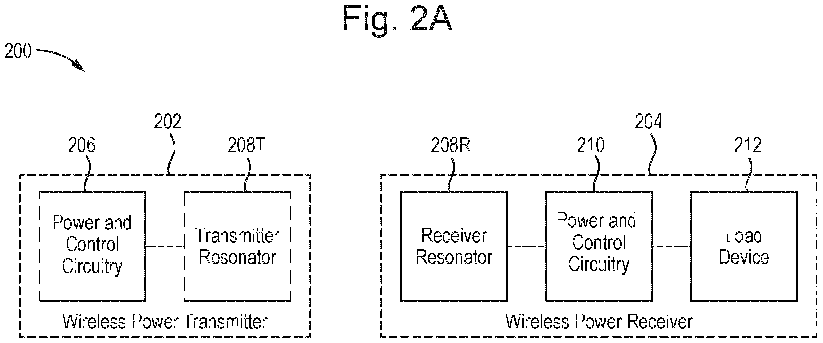

FIG. 2A depicts a diagram of an example wireless power system 200. The system 200 includes a wireless power transmitter 202 and a wireless power receiver 204. A wirelessly powered or wirelessly charged device 212 is coupled to the receiver 204. Wirelessly powered or wirelessly charged devices 212 can include, for example, high-power devices such as electric vehicles or electronic devices such as laptops, smartphones, tablets, and other mobile electronic devices that are commonly placed on desktops, tabletops, bar tops, and other types of surfaces.

For simplicity, wireless power system 200 will be discussed in the context of a wireless charging system for an electric vehicle. For example, system 200 may be a highly-resonant wireless power transfer (HRWPT) system which may operate over a wide range of coupling factors k, load conditions (such as a battery voltage), and environmental conditions that detune the inductances of the resonators (e.g., due to spatial variations and interfering objects). Furthermore, in order to perform wireless charging of electric vehicles, system 200 may be required to operate with high voltages (e.g., between 360V and 800V) and/or high currents (e.g., between 26 A and 40 A) to achieve a suitable range of power (e.g., 0 to 3.7 kW, 0 to 7.7 kW, 0 to 11 kW, or 0 to 22 kW).

The wireless power transmitter 202 may convert power from an external power source (e.g., power grid, generator where the transmitter is part of a ground assembly, or a vehicle battery where the transmitter is part of a vehicle assembly) to electromagnetic energy which may be transmitted between resonators 208T and 208R to wireless power receiver 204. The receiver 204 may then convert the oscillating energy received by the resonator 208R to an appropriate form for use by the device 212 (e.g., charging an electric vehicle battery where the receiver is part of the vehicle assembly, or powering one or more devices where the receiver is part of a ground assembly). More specifically, the receiver power and control circuitry 210 can convert AC voltage and current from resonator 208R to DC power within appropriate voltage and current parameters for device 212.

The transmitter power and control circuitry 206 may include, among other things, a transmitter controller, which may control one or more aspects of the transmitter 202 (e.g., controlling one or more switches of the transmitter 202). The transmitter power and control circuitry 206 may also include one or more circuits or components to isolate the source electronics from the power supply, so that any reflected power or signals are not coupled out through the source input terminals. The source power and control circuitry 206 can drive the transmitter resonator 208T with alternating current, such as with a frequency greater than 10 kHz and less than 100 MHz (e.g., 85 kHz). The transmitter power and control circuitry 206 can include other circuitry such as, for example, power factor correction (PFC) circuitry, a transmitter controller, impedance matching circuitry, a power inverter, a DC-to-DC converter, an AC-to-DC converter, a power amplifier, and/or any combination thereof.

The receiver power and control circuitry 210 can be designed to transform alternating current power from the receiver resonator 208R to stable direct current power suitable for powering or charging one or more devices 212. For example, the receiver power and control circuitry 210 can be designed to transform an alternating current power at one frequency (e.g., 85 kHz) from resonator 208R to alternating current power at a different frequency suitable for powering or charging one or more devices 212. The receiver power and control circuitry 210 can include, for example, a receiver controller, filter circuity, converter circuitry, impedance matching circuitry, rectification circuitry, voltage limiting circuitry, current limiting circuitry, AC-to-DC converter circuitry, DC-to-DC converter circuitry, DC-to-AC circuitry, AC-to-AC converter circuitry, battery charge control circuitry, and/or any combination thereof.

Wireless power transmitter 202 and wireless power receiver 204 may have tuning capabilities, for example, dynamic impedance matching circuits, that allow adjustment of operating points to compensate for changing environmental conditions, perturbations, and loading conditions that can affect the operation of the source and device resonators and the efficiency of the energy transfer. The tuning capability can be controlled automatically, and may be performed continuously, periodically, intermittently or at scheduled times or intervals. In some implementations, tuning is performed synchronously between the transmitter 202 and the receiver 204 as described in more detail below.

The wireless power transmitter 202 may also include a plurality of sensors such as voltage, current, and power sensors to measure transmitter operating parameters. A transmitter controller may use measurements from the sensors to control the operation of the transmitter 202 and to tune the transmitter IMN. Transmitter operating parameters measured by the sensors can include, but are not limited to, inverter bus voltage (V_{bus}), transmitter input power, inverter AC voltage (V_{AC}), inverter AC current (I_{AC}), transmitter power factor (pf), and other voltages and currents as needed for safety checks. In some implementations, the transmitter input power may be measured at an AC input to a transmitter PFC circuit. In some implementations, the transmitter input power may be measured as an inverter power (Pᵢₙ). In some implementations, the inverter power (Pᵢₙ) is measured at the DC input of an inverter of the power and control circuitry 206. In some implementations, inverter power (Pᵢₙ) may be measured at the AC output of the inverter. Transmitter power factor can be measured as the phase difference (φ) between the inverter AC voltage (V_{AC}) and inverter AC current (I_{AC}), where the power factor is the cosine of the phase difference (φ). In some implementations, the phase difference (φ) can be used as a proxy for power factor. That is, a transmitter controller can perform operations based on the phase difference (φ) instead of calculating an actual power factor value. In some implementations, transmitter power factor (pf) can be calculated based on equivalent resistance and reactance values as seen at the output of the inverter. For example, the phase difference (φ) can be represented by: (φ=arctan(Xᵢₙᵥₑᵣₜₑᵣ / Rinverter).

The wireless power receiver 204 may also include a plurality of sensors such as voltage, current, and power sensors to measure receiver operating parameters. Each of these sensors may measure similar signals as are described above with respect to the wireless power transmitter 202. A receiver controller may use measurements from one or more sensors to control the operation of the receiver 204 and to tune the receiver IMN. Receiver operating parameters measured by the sensors can include, but are not limited to, receiver output power (Pₒᵤₜ), rectifier AC voltage, rectifier AC current, rectifier DC voltage, rectifier DC current, and any other suitable voltages or currents.

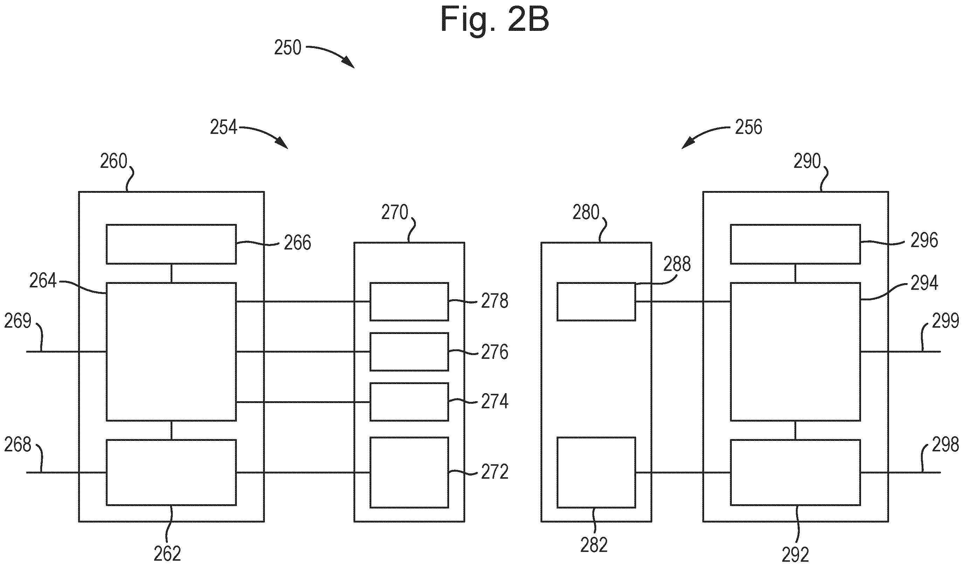

FIG. 2B is a hierarchical block diagram of an example WPT system 250 for wireless electric vehicle charging. At the top hierarchy level, the system 250 comprises a GA 254 and a VA 256. The next lower level shows the GA 254 composed of a GA power conversion & control unit 260 and a WPT ground unit 270, and various connections between these blocks. Splitting the GA into two blocks implies implementations where the GA power conversion & control unit and the ground unit are physically separated and interconnected via a several meters long multiwire cable herein referred to as GA feeder cable (not shown). However, it should not exclude implementations where the GA power conversion & control unit is entirely or partially integrated in the ground unit forming one physical unit with a common housing (not shown).

At the third level, the GA power conversion & control unit includes a GA power converter 262, a GA controller 264, and a GA wireless communication unit 266. The ground unit 270 integrates a GA WPT coil 272 as well as various functions as needed for Foreign Object Detection (FOD), Living Object Detection (LOD), Vehicle Detection (VD), and Position Detection (PD). In the example of FIG. 2B, these functions are provided by a FOD unit 274, a LOD unit 276, and a GA PD unit 278, each configured and connected to the GA controller for exchanging data and control. In some implementations, these functions share or partially share one common hardware platform referred to as a multi-purpose detection system.

In an implementation conforming with the SAE standard, the GA wireless communication unit 266 is a WiFi Access Point providing an air interface to a Wireless Local Area Network (WLAN) of a parking facility. Certain parking facilities provide a central WiFi access point associated to multiple GAs. In such implementations, the GA wireless communication unit 266 is external to the GA 254. In another implementation, the GA wireless communication unit is integral part of the ground unit 270.

The GA WPT coil 272 may include a tuning & impedance matching network (not shown) forming a resonant circuit and the ground-unit is referred to as the GAR as previously mentioned. In other implementations, the tuning & impedance matching network or parts thereof are included in the GA power converter 262. Further, the GA controller 264 interfaces to the GA power converter 262 and the GA wireless communication unit 266 for data exchange and system control. It also provides a data interface 269 (e.g., Ethernet) to communicate with a system external entity e.g., via a backbone network. Moreover, the GA power converter 262 disposes a power interface 268 for feeding or receiving AC or DC power.

At the second level, FIG. 2B shows the VA 256 composed of a WPT vehicle unit 280 connected to a VA power conversion & control unit 290. At a third level, the VA power conversion & control unit 290 comprises a VA power converter 292, a VA controller 294, and a VA wireless communication unit 296. The vehicle unit 280 comprises a VA WPT coil 282 and a VA PD unit 288, the vehicle-side counterpart of the GA PD unit 278 interfacing with the VA controller for data exchange and control. Splitting the VA into two blocks implies implementations where the VA power conversion & control unit and the vehicle unit are physically separated and interconnected via a multiwire cable herein referred to as VA feeder cable (not shown). However, this should not exclude implementations where the VA power conversion & control unit 290 is entirely or partially integrated in the vehicle unit 280 forming one physical unit with a common housing (not shown).

In a standard-conforming implementation, the VA wireless communication unit 296 is a WiFi Client. As with the GA wireless communication unit, the VA wireless communication unit may be external to the VA 256, e.g., mounted anywhere on the vehicle or parts or it may be partially or fully integrated into the vehicle unit.

In some implementations, the VA WPT coil 282 includes a tuning & impedance matching network (not shown) forming a resonant circuit and the vehicle unit is referred to as the VAR as previously mentioned. Further, the VA controller interfaces to the VA power converter and the VA wireless communication unit for data exchange and control. It also provides a line communication interface 299, e.g., a CAN bus interface to communicate with an external vehicle onboard entity. Moreover, the VA power converter disposes a power interface 298 for feeding or receiving DC power.

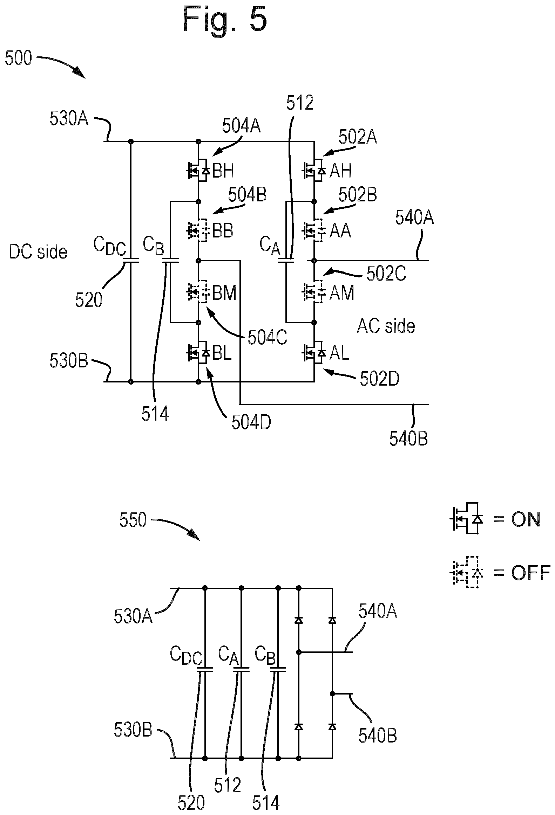

FIG. 3 illustrates an example schematic diagram 300 of a portion of a wireless power receiver, such as receiver 204, in accordance with some embodiments. FIG. 3 also illustrates an example simplified diagram 350 of the schematic diagram 300, wherein the switches are replaced with open circuits or short circuits, as discussed in more detail below. The circuit illustrated in FIG. 3 is one example converter circuitry for which the pre-charge sequence described herein may be used. The pre-charge sequence could also be used with other circuitry, such as those described below with respect to FIGS. 5, 6, and 7.

Diagram 300 may illustrate a multi-level flying capacitor converter. The converter may also include a controller (not shown), which may receive signals from one or more sensors (e.g., to measure various receiver voltages and currents) as well as control the state of one or more switches of the converter shown in diagram 300, in order to execute the pre-charge sequence for the flying capacitor(s), as described herein.

The diagram 300 illustrates a plurality of switches 302A-D, 304A-D, and 306A-D, comprising switch legs A, B, and C respectively. As shown in FIG. 3, each switch leg comprises four switches connected in series. Each switch may be a metal oxide semiconductor field effect transistor (MOSFET) and may be configured to transition between an on state and an off state, controlled by the receiver controller. The switch legs A, B, and C may operate together as a multi-level converter to convert the input power from the input terminals 330A-B into a suitable format at the output terminals of the converter 340A-B.

Capacitors 312, 314, and 316 are "flying capacitors" that correspond to switch legs A, B, and C respectively. Each flying capacitor 312, 314, and 316 has a first terminal and a second terminal, wherein the first terminal is connected at a node between the respective first and second switches of the switch leg (e.g., between switches 302A and 302B, 304A and 304B, and 306A and 306B). Each flying capacitor 312, 314, and 316 also has a second terminal connected at a second node between the respective third and fourth switches of the switch leg (e.g., between switches 302C and 302D, 304C and 304D, and 306C and 306D).

The diagram 300 also includes a DC link capacitor 320 connected in parallel to one or more of the switch legs between the first and second voltage source terminals 330A-B. The DC link capacitor 320 acts to smooth out ripples or fluctuations in the current, so as to provide a more stable output at the output terminals 340A-B. In some examples, the input voltage terminals 330A-B may be connected to an auxiliary power supply. The auxiliary power supply may be a battery of the vehicle assembly. Diagram 300 also illustrates switches 322A and 322B, which are switches at the power grid frequency such as 50Hz or 60Hz. Switches 322A and 322B connect to terminal 330B, thereby completing the current loop with the power grid together with terminal 330A.

Schematic diagram 350 of FIG. 3 illustrates a simplified version of diagram 300 that occurs based on the switch configuration shown in diagram 300. That is, when switches 302B-C, 304B-C, and 306B-C are switched off and the remaining switches are turned on, the flying capacitors 312, 314, and 316 are all connected in parallel with the DC link capacitor 320 between the input terminals 330A-B.

The diagram 300 may also include one or more sensors (not shown) configured to perform current and voltage measurement at various point within the circuitry. The sensor data may be used by the receiver controller for various purposes such as, for example, to determine when one or more of the flying capacitors or the DC link capacitor are charged, to regulate the charging current, to ramp up and ramp down power smoothly, to operate the system in a low power mode if applicable, to emit a low power (beacon) signal that can be used to assist with alignment of the transmitter and receiver, and other tuning and testing purposes.

As illustrated in FIG. 3, the power source for pre-charging the flying capacitors 312, 314, and 316, and the DC link capacitor 320, may be connected to the input terminals 330A-B. The power source may be the vehicle battery, or another auxiliary power source. Additionally, in some examples, the power source may be an auxiliary power source of the ground assembly (e.g., a battery or other energy storage device of the ground assembly). In still other examples, the power source for pre-charging the flying capacitors and the DC link capacitor may be connected to the output terminals 340A-B, and may again be a vehicle power source (e.g., vehicle battery or other auxiliary power source of the vehicle), or a ground assembly power source (e.g., a ground assembly battery or other auxiliary power source of the ground assembly).

FIG. 3 also illustrates that in some embodiments, the converter circuitry 300 may be connected to the VA 346. The VA 346 may provide power to the output terminals 340A-B, which may be used to pre-charge the flying capacitors 312, 314, and 316, and the DC link capacitor 320.

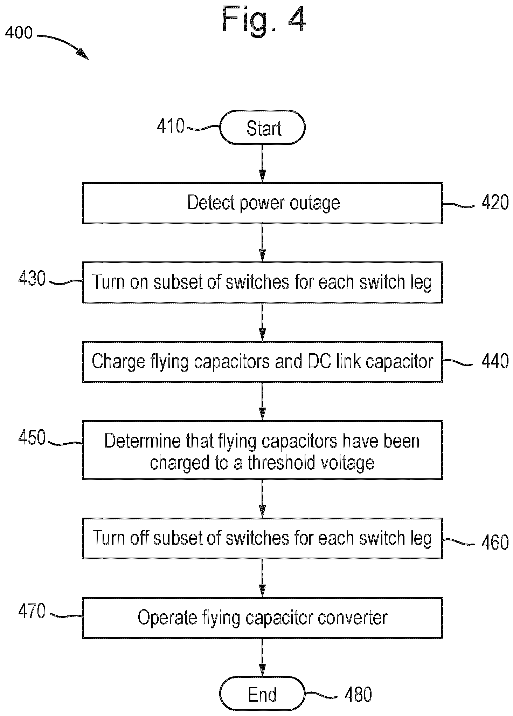

FIG. 4 is an example flowchart of a process 400 for pre-charging flying capacitors within a flying capacitor converter for a wireless power transfer system, in accordance with some examples of the disclosure. The process 400 may be carried out by systems and devices described herein, such as those shown and described with respect to FIGS. 1-3. One or more actions of the process 400 may be incorporated into or combined with one or more actions of any other process or embodiments described herein. The process 400 may be saved to a memory or storage as one or more instructions or routines that may be executed by a corresponding device or system to implement the process 400.

In some examples, the ground assembly may be cut off from power, such as during a blackout or other electrical grid interruption. In these cases, a ground assembly that includes a flying capacitor converter may be unable to pre-charge the flying capacitors, and thus may be unable to operate. Process 400 shows an example method for pre-charging the flying capacitor(s) of the ground assembly using power supplied by a vehicle assembly.

At step 410, the process 400 begins. At step 420, the process 400 includes determining whether there has been a power outage at the ground assembly. This may include determining both that the ground assembly remains connected to the electrical grid in addition to determining that the ground assembly is not receiving power from the electrical grid. In other examples, this may include determining that the ground assembly is not receiving any power at all, is receiving insufficient power, inconsistent power, or any other form of power that is not ideal for nominal operation of the ground assembly.

Steps 430-460 comprise the pre-charge sequence for the flying capacitors of the converter in the ground assembly. At step 430, the process 400 includes turning on a subset of the switches in each switch leg of the converter. In particular, this may include turning on the outermost switches in order to complete the connection between the outer switches of each leg and the flying capacitor. With reference to FIG. 3, step 430 may include turning on switches 302A/302D, 304A/304D, and 306A/306D respectively for switch legs A, B, and C. In some examples, step 430 may also include turning on one or more other switches, such as switches 322A and 322B shown in FIG. 3.

At step 440, after turning on the subset of switches, the process 400 includes charging the flying capacitors and the DC link capacitor. Because the flying capacitors (e.g., capacitors 312, 314, and 316) are connected in parallel to the DC link capacitor (e.g., capacitor 320) and are connected between the first and second voltage terminals (e.g., terminals 330A and 330B), they are all charged simultaneously. In some examples, the input voltage terminals may be powered by an auxiliary power supply, by the vehicle power supply of the vehicle assembly, or by any other suitable power source.

At step 450, the process 400 includes determining that the flying capacitors have been charged to a threshold voltage. This may include the controller automatically charging the capacitors for a preset duration of time. Alternatively, there may be one or more sensors configured to detect voltages and/or currents within the converter, which may enable the controller to determine when the flying capacitors have reached their desired charge. In one example, the desired charge or threshold charge may be half of the full voltage between the input voltage terminals.

At step 460, the process 400 includes turning off the subset of switches that were turned on at step 430. That is, once the flying capacitors (e.g., 312, 314, 316) have been charged, they are disconnected from the input voltage terminals 330A and 330B. However, the DC link capacitor 320 may remain connected to the voltage terminals and may thus continue to charge.

At step 470, the process 400 includes operating the flying capacitor converter. At step 460, the pre-charge sequence for the flying capacitors is completed, so step 470 may include moving the converter to the normal operation regime. The process 400 may then continue until an input to stop the WPT system from operating is received, the converter is turned off, or some other input is received, and the process 400 may end at step 480.

FIG. 5 illustrates an example schematic diagram 500 of a portion of a wireless power receiver, such as receiver 204, in accordance with some embodiments. FIG. 5 also illustrates an example simplified diagram 550 of the schematic diagram 500, wherein the switches are replaced with open circuits or short circuits, as discussed in more detail below. The circuit illustrated in FIG. 5 is one example converter circuitry for which the pre-charge sequence described herein may be used. The pre-charge sequence could also be used with other circuitry, such as those described with respect to FIGS. 3, 6, and 7.

Diagram 500 may illustrate a multi-level flying capacitor converter, having two levels. The converter may also include a controller (not shown), which may receive signals from one or more sensors (e.g., to measure various receiver voltages and currents) as well as control the state of one or more switches of the converter shown in diagram 500, in order to execute the pre-charge sequence for the flying capacitor(s), as described herein.

The diagram 500 illustrates a plurality of switches 502A-D and 504A-D, comprising switch legs A and B respectively. As shown in FIG. 5, each switch leg comprises four switches connected in series. Each switch may be a metal oxide semiconductor field effect transistor (MOSFET) and may be configured to transition between an on state and an off state, controlled by the receiver controller. The switch legs A and B may operate together as a multi-level converter to convert the input power from the input terminals 530A-B into a suitable format at the output terminals of the converter 540A-B.

Capacitors 512 and 514 are flying capacitors that correspond to switch legs A and B respectively. Each flying capacitor 512 and 514 has a first terminal and a second terminal, wherein the first terminal is connected at a node between the respective first and second switches of the switch leg (e.g., between switches 502A and 502B, and 504A and 504B). Each flying capacitor 512 and 514 also has a second terminal connected at a second node between the respective third and fourth switches of the switch leg (e.g., between switches 502C and 502D, and 504C and 504D).

The diagram 500 also includes a DC link capacitor 520 connected in parallel to one or more of the switch legs between the first and second voltage source terminals 530A-B. The DC link capacitor 520 acts to smooth out ripples or fluctuations in the current, so as to provide a more stable output at the output terminals 540A-B. In some examples, the input voltage terminals 530A-B may be connected to an auxiliary power supply. The auxiliary power supply may be a battery of the vehicle assembly.

Schematic diagram 550 of FIG. 5 illustrates a simplified version of diagram 500 that occurs based on the switch configuration shown in diagram 500. That is, when switches 502B-C and 504B-C are switched off and the remaining switches are turned on, the flying capacitors 512 and 514 are connected in parallel with the DC link capacitor 520 between the input terminals 530A-B.

The diagram 500 may also include one or more sensors (not shown) configured to perform current and voltage measurement at various point within the circuitry. The sensor data may be used by the receiver controller for various purposes such as, for example, to determine when one or more of the flying capacitors or the DC link capacitor are charged, to regulate the charging current, to ramp up and ramp down power smoothly, to operate the system in a low power mode if applicable, to emit a low power (beacon) signal that can be used to assist with alignment of the transmitter and receiver, and other tuning and testing purposes.

As illustrated in FIG. 5, the power source for pre-charging the flying capacitors 512 and 514, and the DC link capacitor 520, may be connected to the input terminals 530A-B. The power source may be the vehicle battery, or another auxiliary power source. Additionally, in some examples, the power source may be an auxiliary power source of the ground assembly (e.g., a battery or other energy storage device of the ground assembly). In still other examples, the power source for pre-charging the flying capacitors and the DC link capacitor may be connected to the output terminals 540A-B, and may again be a vehicle power source (e.g., vehicle battery or other auxiliary power source of the vehicle), or a ground assembly power source (e.g., a ground assembly battery or other auxiliary power source of the ground assembly).

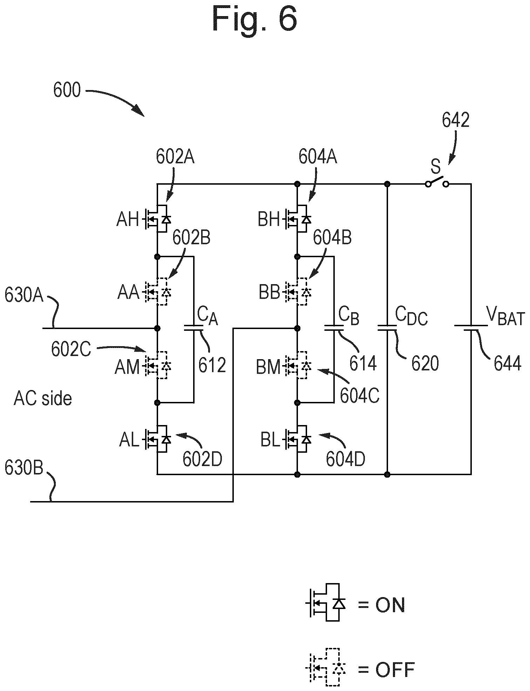

FIG. 6 illustrates an example schematic diagram 600 of a portion of a wireless power receiver, such as receiver 204, in accordance with some embodiments. The circuit illustrated in FIG. 5 is one example converter circuitry for which the pre-charge sequence described herein may be used. The pre-charge sequence could also be used with other circuitry, such as those described with respect to FIGS. 3, 5, and 7.

Diagram 600 may illustrate a multi-level flying capacitor converter, having two levels. The converter may also include a controller (not shown), which may receive signals from one or more sensors (e.g., to measure various receiver voltages and currents) as well as control the state of one or more switches of the converter shown in diagram 600, in order to execute the pre-charge sequence for the flying capacitor(s), as described herein.

The diagram 600 illustrates a plurality of switches 602A-D and 604A-D, comprising switch legs A and B respectively. As shown in FIG. 6, each switch leg comprises four switches connected in series. Each switch may be a metal oxide semiconductor field effect transistor (MOSFET) and may be configured to transition between an on state and an off state, controlled by the receiver controller. The switch legs A and B may operate together as a multi-level converter to convert the input power from the input terminals 630A-B into a suitable format at the output of the converter 644. The circuit 600 also illustrates a switch 642, configured to selectively connect the output 644 to the rest of the converter circuit.

Capacitors 612 and 614 are flying capacitors that correspond to switch legs A and B respectively. Each flying capacitor 612 and 614 has a first terminal and a second terminal, wherein the first terminal is connected at a node between the respective first and second switches of the switch leg (e.g., between switches 602A and 602B, and 604A and 604B). Each flying capacitor 612 and 614 also has a second terminal connected at a second node between the respective third and fourth switches of the switch leg (e.g., between switches 602C and 602D, and 604C and 604D).

The diagram 600 also includes a DC link capacitor 620 connected in parallel to one or more of the switch legs between the first and second voltage source terminals 630A-B. The DC link capacitor 620 acts to smooth out ripples or fluctuations in the current, so as to provide a more stable output at the output 644. In some examples, the input voltage terminals 630A-B may be connected to an auxiliary power supply. The auxiliary power supply may be a battery of the vehicle assembly.

The diagram 600 may also include one or more sensors (not shown) configured to perform current and voltage measurement at various point within the circuitry. The sensor data may be used by the receiver controller for various purposes such as, for example, to determine when one or more of the flying capacitors or the DC link capacitor are charged, to regulate the charging current, to ramp up and ramp down power smoothly, to operate the system in a low power mode if applicable, to emit a low power (beacon) signal that can be used to assist with alignment of the transmitter and receiver, and other tuning and testing purposes.

As illustrated in FIG. 6, the power source for pre-charging the flying capacitors 612 and 614, and the DC link capacitor 620, may be connected to the input terminals 630A-B. The power source may be the vehicle battery, or another auxiliary power source. Additionally, in some examples, the power source may be an auxiliary power source of the ground assembly (e.g., a battery or other energy storage device of the ground assembly). In still other examples, the power source for pre-charging the flying capacitors and the DC link capacitor may be connected to the output 644, and may again be a vehicle power source (e.g., vehicle battery or other auxiliary power source of the vehicle), or a ground assembly power source (e.g., a ground assembly battery or other auxiliary power source of the ground assembly).

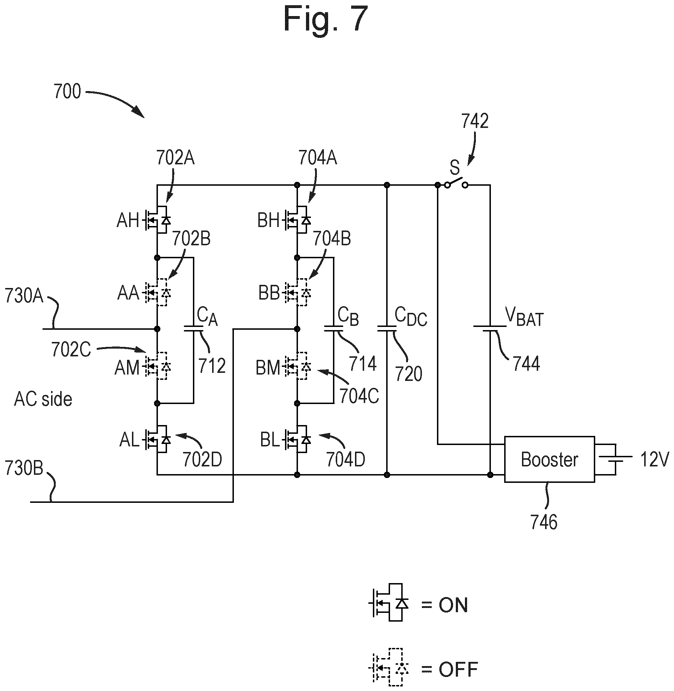

FIG. 7 illustrates an example schematic diagram 700 of a portion of a wireless power receiver, such as receiver 204, in accordance with some embodiments. The circuit illustrated in FIG. 7 is one example converter circuitry for which the pre-charge sequence described herein may be used. The pre-charge sequence could also be used with other circuitry, such as those described with respect to FIGS. 3, 5, and 6.

Diagram 700 may illustrate a multi-level flying capacitor converter, having two levels. The converter may also include a controller (not shown), which may receive signals from one or more sensors (e.g., to measure various receiver voltages and currents) as well as control the state of one or more switches of the converter shown in diagram 700, in order to execute the pre-charge sequence for the flying capacitor(s), as described herein.

The diagram 700 illustrates a plurality of switches 702A-D and 704A-D, comprising switch legs A and B respectively. As shown in FIG. 7, each switch leg comprises four switches connected in series. Each switch may be a metal oxide semiconductor field effect transistor (MOSFET) and may be configured to transition between an on state and an off state, controlled by the receiver controller. The switch legs A and B may operate together as a multi-level converter to convert the input power from the input terminals 730A-B into a suitable format at the output of the converter 744. The circuit 700 also illustrates a switch 742, configured to selectively connect the output 644 to the rest of the converter circuit. Further, the circuit 700 includes a booster 746 configured to provide a solution to mitigate an inrush of current to the system.

Capacitors 712 and 714 are flying capacitors that correspond to switch legs A and B respectively. Each flying capacitor 712 and 714 has a first terminal and a second terminal, wherein the first terminal is connected at a node between the respective first and second switches of the switch leg (e.g., between switches 702A and 702B, and 704A and 704B). Each flying capacitor 712 and 714 also has a second terminal connected at a second node between the respective third and fourth switches of the switch leg (e.g., between switches 702C and 702D, and 704C and 704D).

The diagram 700 also includes a DC link capacitor 720 connected in parallel to one or more of the switch legs between the first and second voltage source terminals 730A-B. The DC link capacitor 720 acts to smooth out ripples or fluctuations in the current, so as to provide a more stable output at the output 744. In some examples, the input voltage terminals 730A-B may be connected to an auxiliary power supply. The auxiliary power supply may be a battery of the vehicle assembly.

The diagram 700 may also include one or more sensors (not shown) configured to perform current and voltage measurement at various point within the circuitry. The sensor data may be used by the receiver controller for various purposes such as, for example, to determine when one or more of the flying capacitors or the DC link capacitor are charged, to regulate the charging current, to ramp up and ramp down power smoothly, to operate the system in a low power mode if applicable, to emit a low power (beacon) signal that can be used to assist with alignment of the transmitter and receiver, and other tuning and testing purposes.

As illustrated in FIG. 7, the power source for pre-charging the flying capacitors 712 and 714, and the DC link capacitor 720, may be connected to the input terminals 730A-B. The power source may be the vehicle battery, or another auxiliary power source. Additionally, in some examples, the power source may be an auxiliary power source of the ground assembly (e.g., a battery or other energy storage device of the ground assembly). In still other examples, the power source for pre-charging the flying capacitors and the DC link capacitor may be connected to the output 744 or the booster 746, and may again be a vehicle power source (e.g., vehicle battery or other auxiliary power source of the vehicle), or a ground assembly power source (e.g., a ground assembly battery or other auxiliary power source of the ground assembly).

The systems, devices, and processes discussed above are intended to be illustrative and not limiting. One skilled in the art would appreciate that the actions of the processes discussed herein may be omitted, modified, combined, and/or rearranged, and any additional actions may be performed without departing from the scope of the invention. Furthermore, it should be noted that the features and limitations described in any one embodiment may be applied to any other embodiment herein, and flowcharts or examples relating to one embodiment may be combined with any other embodiment in a suitable manner, done in different orders, or done in parallel. In addition, the systems and methods described herein may be performed in real-time. It should also be noted that the systems and/or methods described above may be applied to, or used in accordance with, other systems and/or methods.

All of the features disclosed in this specification (including any accompanying claims, abstract, and drawings), and/or all of the steps of any method or process so disclosed, may be combined in any combination, except combinations where at least some of such features and/or steps are mutually exclusive.

Each feature disclosed in this specification (including any accompanying claims, abstract, and drawings), may be replaced by alternative features serving the same, equivalent, or similar purpose unless expressly stated otherwise. Thus, unless expressly stated otherwise, each feature disclosed is one example only of a generic series of equivalent or similar features.

Throughout the description and claims of this specification, the words "comprise" and "contain" and variations of them mean "including but not limited to", and they are not intended to (and do not) exclude other moieties, additives, components, integers, or steps. Throughout the description and claims of this specification, the singular encompasses the plural unless the context otherwise requires. In particular, where the indefinite article is used, the specification is to be understood as contemplating plurality as well as singularity, unless the context requires otherwise.

The reader's attention is directed to all papers and documents which are filed concurrently with or previous to this specification in connection with this application and which are open to public inspection with this specification, and the contents of all such papers and documents are incorporated herein by reference.

This specification discloses embodiments which include, but are not limited to, the following:
1. A method for operating an electric vehicle charging system comprising a ground assembly and a vehicle assembly, the method comprising:
   determining that the ground assembly is connected to an electric grid and is not receiving power from the electric grid;
   executing a flying capacitor pre-charge sequence for the ground assembly, wherein the ground assembly comprises (1) a first switch leg comprising first, second, third, and fourth switches, wherein the first, second, third and fourth switches are connected in series between first and second voltage source terminals, (2) a flying capacitor, wherein a first terminal of the flying capacitor is connected at a first node between the first switch and the second switch and a second terminal of the flying capacitor is connected at a second node between the third switch and the fourth switch, and (3) a DC link capacitor connected in parallel to the first switch leg between the first and second voltage source terminals, wherein the flying capacitor pre-charge sequence comprises:
      switching on the first and fourth switches to connect the flying capacitor to the first and second voltage source terminals in parallel with the DC link capacitor;
      determining that the flying capacitor has reached a threshold voltage; and
      in response to determining that the flying capacitor has reached the threshold voltage, switching off the first and fourth switches.
2. The method of item 1, wherein the flying capacitor pre-charge sequence further comprises, in response to determining that the flying capacitor has reached the threshold voltage, switching off the first and fourth switches while the DC link capacitor remains connected between the first and second voltage source terminals.
3. The method of items 1 or 2, wherein the first and second voltage source terminals are connected to an auxiliary power supply.
4. The method of any of the preceding items, wherein the first and second voltage source terminals are wirelessly connected to a power supply of the vehicle assembly.
5. The method of item 4, wherein the power supply of the vehicle assembly is a vehicle battery.
6. The method of any of the preceding items, wherein the first switch is connected to the first voltage terminal, the fourth switch is connected to the second voltage source terminal, and the second and third switches are connected in series between the first and fourth switches.
7. The method of any of the preceding items, wherein the flying capacitor pre-charge sequence further comprises: determining that the flying capacitor has reached the threshold voltage based on sensor data from one or more sensors.
8. The method of any of the preceding items, wherein the ground assembly further comprises a plurality of switch legs, each switch leg of the plurality of switch legs comprising (1) a respective first, second, third, and fourth switch and (2) a respective flying capacitor.
9. The method of item 8, wherein the flying capacitor pre-charge sequence further comprises:
   switching on the respective first and fourth switches of each of the plurality of switch legs;
   determining that the respective flying capacitors of each of the plurality of switch legs have reached the threshold voltage; and
   in response to determining that each of the respective flying capacitors of the plurality of switch legs have reached the threshold voltage, switching off the respective first and fourth switches of each of the plurality of switch legs.
10. The method of any of the preceding items, wherein the first, second, third, and fourth switches each comprise a metal oxide semiconductor field effect transistor.
11. A wireless power system for electric vehicle charging, the wireless power system comprising:
   a vehicle assembly,
   a ground assembly comprising:
      a first switch leg comprising first, second, third, and fourth switches, wherein the first, second, third and fourth switches are connected in series between first and second voltage source terminals;
      a flying capacitor, wherein a first terminal of the flying capacitor is connected at a first node between the first switch and the second switch and a second terminal of the flying capacitor is connected at a second node between the third switch and the fourth switch; and
      a DC link capacitor connected in parallel to the first switch leg between the first and second voltage source terminals; and
      a controller for controlling the ground assembly to execute a flying capacitor pre-charge sequence, wherein the controller is configured to:
         switch on the first and fourth switches to connect the flying capacitor to the first and second voltage source terminals in parallel with the DC link capacitor;
         determine that the flying capacitor has reached a threshold voltage; and
         in response to determining that the flying capacitor has reached the threshold voltage, switch off the first and fourth switches while the DC link capacitor remains connected between the first and second voltage source terminals.
12. The system of item 11, wherein the controller is further configured to: in response to determining that the flying capacitor has reached the threshold voltage, switch off the first and fourth switches while the DC link capacitor remains connected between the first and second voltage source terminals.
13. The system of item 11 or 12, wherein the first and second voltage source terminals are connected to an auxiliary power supply.
14. The system of any of items 11-13, wherein the first and second voltage source terminals are wirelessly connected to a power supply of the vehicle assembly.
15. The system of item 14, wherein the power supply of the vehicle assembly is a vehicle battery.
16. The system of any of items 11-15, wherein the first switch is connected to the first voltage terminal, the fourth switch is connected to the second voltage source terminal, and the second and third switches are connected in series between the first and fourth switches.
17. The system of any of items 11-16, wherein the controller is further configured to: determine that the flying capacitor has reached the threshold voltage based on sensor data from one or more sensors.
18. The system of any of items 11-17, wherein the ground assembly further comprises a plurality of switch legs, each switch leg of the plurality of switch legs comprising (1) a respective first, second, third, and fourth switch and (2) a respective flying capacitor.
19. The system of item 18, wherein the controller is further configured to:
   switch on the respective first and fourth switches of each of the plurality of switch legs;
   determine that the respective flying capacitors of each of the plurality of switch legs have reached the threshold voltage; and
   in response to determining that each of the respective flying capacitors of the plurality of switch legs have reached the threshold voltage, switch off the respective first and fourth switches of each of the plurality of switch legs.
20. The system of any of items 11-19, wherein the first, second, third, and fourth switches each comprise a metal oxide semiconductor field effect transistor.
21. A method for operating a vehicle assembly of a wireless charging system, the method comprising:
   determining that a ground assembly is connected to an electric grid and is not receiving power from the electric grid;
   executing a flying capacitor pre-charge sequence for the vehicle assembly, wherein the vehicle assembly comprises (1) a first switch leg comprising first, second, third, and fourth switches, wherein the first, second, third and fourth switches are connected in series between first and second voltage source terminals, (2) a flying capacitor, wherein a first terminal of the flying capacitor is connected at a first node between the first switch and the second switch and a second terminal of the flying capacitor is connected at a second node between the third switch and the fourth switch, and (3) a DC link capacitor connected in parallel to the first switch leg between the first and second voltage source terminals, wherein the flying capacitor pre-charge sequence comprises:
      switching on the first and fourth switches to connect the flying capacitor to the first and second voltage source terminals in parallel with the DC link capacitor;
      determining that the flying capacitor has reached a threshold voltage; and
      in response to determining that the flying capacitor has reached the threshold voltage, switching off the first and fourth switches.
22. The method of item 21, wherein the flying capacitor pre-charge sequence further comprises, in response to determining that the flying capacitor has reached the threshold voltage, switching off the first and fourth switches while the DC link capacitor remains connected between the first and second voltage source terminals.
23. The method of item 21 or 22, wherein the first and second voltage source terminals are connected to an auxiliary power supply.
24. The method of any of items 21-23, wherein the first and second voltage source terminals are wirelessly connected to a power supply of the vehicle assembly.
25. The method of any of item 24, wherein the power supply of the vehicle assembly is a vehicle battery.
26. The method of any of items 21-25, wherein the first switch is connected to the first voltage terminal, the fourth switch is connected to the second voltage source terminal, and the second and third switches are connected in series between the first and fourth switches.
27. The method of any of items 21-26, wherein the flying capacitor pre-charge sequence further comprises: determining that the flying capacitor has reached the threshold voltage based on sensor data from one or more sensors.
28. The method of any of items 21-27, wherein the vehicle assembly further comprises a plurality of switch legs, each switch leg of the plurality of switch legs comprising (1) a respective first, second, third, and fourth switch and (2) a respective flying capacitor.
29. The method of item 28, wherein the flying capacitor pre-charge sequence further comprises:
   switching on the respective first and fourth switches of each of the plurality of switch legs;
   determining that the respective flying capacitors of each of the plurality of switch legs have reached the threshold voltage; and
   in response to determining that each of the respective flying capacitors of the plurality of switch legs have reached the threshold voltage, switching off the respective first and fourth switches of each of the plurality of switch legs.
30. The method of any of items 21-29, wherein the first, second, third, and fourth switches each comprise a metal oxide semiconductor field effect transistor.
31. A vehicle assembly for a wireless power transfer system comprising:
   a first switch leg comprising first, second, third, and fourth switches, wherein the first, second, third and fourth switches are connected in series between first and second voltage source terminals;
   a flying capacitor, wherein a first terminal of the flying capacitor is connected at a first node between the first switch and the second switch and a second terminal of the flying capacitor is connected at a second node between the third switch and the fourth switch; and
   a DC link capacitor connected in parallel to the first switch leg between the first and second voltage source terminals; and
   a controller for controlling the vehicle assembly to execute a flying capacitor pre-charge sequence, wherein the controller is configured to:
      switch on the first and fourth switches to connect the flying capacitor to the first and second voltage source terminals in parallel with the DC link capacitor;
      determine that the flying capacitor has reached a threshold voltage; and
      in response to determining that the flying capacitor has reached the threshold voltage, switch off the first and fourth switches while the DC link capacitor remains connected between the first and second voltage source terminals.
32. The vehicle assembly of item 31, wherein the controller is further configured to: in response to determining that the flying capacitor has reached the threshold voltage, switch off the first and fourth switches while the DC link capacitor remains connected between the first and second voltage source terminals.
33. The vehicle assembly of item 31 or 32, wherein the first and second voltage source terminals are connected to an auxiliary power supply.
34. The vehicle assembly of any of items 31-33, wherein the first and second voltage source terminals are wirelessly connected to a power supply of the vehicle assembly.
35. The vehicle assembly of item 34, wherein the power supply of the vehicle assembly is a vehicle battery.
36. The vehicle assembly of any of items 31-35, wherein the first switch is connected to the first voltage terminal, the fourth switch is connected to the second voltage source terminal, and the second and third switches are connected in series between the first and fourth switches.
37. The vehicle assembly of any of items 31-36, wherein the controller is further configured to: determine that the flying capacitor has reached the threshold voltage based on sensor data from one or more sensors.
38. The vehicle assembly of any of items 31-37, wherein the vehicle assembly further comprises a plurality of switch legs, each switch leg of the plurality of switch legs comprising (1) a respective first, second, third, and fourth switch and (2) a respective flying capacitor.
39. The vehicle assembly of item 38, wherein the controller is further configured to:
   switch on the respective first and fourth switches of each of the plurality of switch legs;
   determine that the respective flying capacitors of each of the plurality of switch legs have reached the threshold voltage; and
   in response to determining that each of the respective flying capacitors of the plurality of switch legs have reached the threshold voltage, switch off the respective first and fourth switches of each of the plurality of switch legs.
40. The vehicle assembly of any of items 31-39, wherein the first, second, third, and fourth switches each comprise a metal oxide semiconductor field effect transistor.
41. A method for operating a ground assembly of a wireless charging system, the method comprising:
   determining that the ground assembly is connected to an electric grid and is not receiving power from the electric grid;
   executing a flying capacitor pre-charge sequence for the ground assembly, wherein the ground assembly comprises (1) a first switch leg comprising first, second, third, and fourth switches, wherein the first, second, third and fourth switches are connected in series between first and second voltage source terminals, (2) a flying capacitor, wherein a first terminal of the flying capacitor is connected at a first node between the first switch and the second switch and a second terminal of the flying capacitor is connected at a second node between the third switch and the fourth switch, and (3) a DC link capacitor connected in parallel to the first switch leg between the first and second voltage source terminals, wherein the flying capacitor pre-charge sequence comprises:
      switching on the first and fourth switches to connect the flying capacitor to the first and second voltage source terminals in parallel with the DC link capacitor;
      determining that the flying capacitor has reached a threshold voltage; and
      in response to determining that the flying capacitor has reached the threshold voltage, switching off the first and fourth switches.
42. The method of item 41, wherein the flying capacitor pre-charge sequence further comprises, in response to determining that the flying capacitor has reached the threshold voltage, switching off the first and fourth switches while the DC link capacitor remains connected between the first and second voltage source terminals.
43. The method of item 41 or 42, wherein the first and second voltage source terminals are connected to an auxiliary power supply.
44. The method of any of items 41-43, wherein the first and second voltage source terminals are wirelessly connected to a power supply of a vehicle assembly.
45. The method of item 44, wherein the power supply of the vehicle assembly is a vehicle battery.
46. The method of any of items 41-45, wherein the first switch is connected to the first voltage terminal, the fourth switch is connected to the second voltage source terminal, and the second and third switches are connected in series between the first and fourth switches.
47. The method of items 41-46, wherein the flying capacitor pre-charge sequence further comprises: determining that the flying capacitor has reached the threshold voltage based on sensor data from one or more sensors.
48. The method of any of items 41-47, wherein the ground assembly further comprises a plurality of switch legs, each switch leg of the plurality of switch legs comprising (1) a respective first, second, third, and fourth switch and (2) a respective flying capacitor.
49. The method of item 48, wherein the flying capacitor pre-charge sequence further comprises:
   switching on the respective first and fourth switches of each of the plurality of switch legs;
   determining that the respective flying capacitors of each of the plurality of switch legs have reached the threshold voltage; and
   in response to determining that each of the respective flying capacitors of the plurality of switch legs have reached the threshold voltage, switching off the respective first and fourth switches of each of the plurality of switch legs.
50. The method of any of items 41-49, wherein the first, second, third, and fourth switches each comprise a metal oxide semiconductor field effect transistor.
51. A ground assembly for a wireless power transfer system comprising:
   a first switch leg comprising first, second, third, and fourth switches, wherein the first, second, third and fourth switches are connected in series between first and second voltage source terminals;
   a flying capacitor, wherein a first terminal of the flying capacitor is connected at a first node between the first switch and the second switch and a second terminal of the flying capacitor is connected at a second node between the third switch and the fourth switch; and
   a DC link capacitor connected in parallel to the first switch leg between the first and second voltage source terminals; and
   a controller for controlling the ground assembly to execute a flying capacitor pre-charge sequence, wherein the controller is configured to:
      switch on the first and fourth switches to connect the flying capacitor to the first and second voltage source terminals in parallel with the DC link capacitor;
      determine that the flying capacitor has reached a threshold voltage; and
      in response to determining that the flying capacitor has reached the threshold voltage, switch off the first and fourth switches while the DC link capacitor remains connected between the first and second voltage source terminals.
52. The ground assembly of item 51, wherein the controller is further configured to: in response to determining that the flying capacitor has reached the threshold voltage, switch off the first and fourth switches while the DC link capacitor remains connected between the first and second voltage source terminals.
53. The ground assembly of item 51 or 52, wherein the first and second voltage source terminals are connected to an auxiliary power supply.
54. The ground assembly of any of items 51-53, wherein the first and second voltage source terminals are wirelessly connected to a power supply of a vehicle assembly.
55. The ground assembly of item 54, wherein the power supply of the vehicle assembly is a vehicle battery.
56. The ground assembly of any of items 51-55, wherein the first switch is connected to the first voltage terminal, the fourth switch is connected to the second voltage source terminal, and the second and third switches are connected in series between the first and fourth switches.
57. The ground assembly of any of items 51-56, wherein the controller is further configured to: determine that the flying capacitor has reached the threshold voltage based on sensor data from one or more sensors.
58. The ground assembly of any of items 51-57, wherein the ground assembly further comprises a plurality of switch legs, each switch leg of the plurality of switch legs comprising (1) a respective first, second, third, and fourth switch and (2) a respective flying capacitor.
59. The ground of item 58, wherein the controller is further configured to:
   switch on the respective first and fourth switches of each of the plurality of switch legs;
   determine that the respective flying capacitors of each of the plurality of switch legs have reached the threshold voltage; and
   in response to determining that each of the respective flying capacitors of the plurality of switch legs have reached the threshold voltage, switch off the respective first and fourth switches of each of the plurality of switch legs.
60. The ground assembly of any of items 51-59, wherein the first, second, third, and fourth switches each comprise a metal oxide semiconductor field effect transistor.

## Claims

1. A method for operating an electric vehicle charging system comprising a ground assembly and a vehicle assembly, the method comprising:
determining that the ground assembly is connected to an electric grid and is not receiving power from the electric grid;
executing a flying capacitor pre-charge sequence for the ground assembly, wherein the ground assembly comprises (1) a first switch leg comprising first, second, third, and fourth switches, wherein the first, second, third and fourth switches are connected in series between first and second voltage source terminals, (2) a flying capacitor, wherein a first terminal of the flying capacitor is connected at a first node between the first switch and the second switch and a second terminal of the flying capacitor is connected at a second node between the third switch and the fourth switch, and (3) a DC link capacitor connected in parallel to the first switch leg between the first and second voltage source terminals, wherein the flying capacitor pre-charge sequence comprises:
switching on the first and fourth switches to connect the flying capacitor to the first and second voltage source terminals in parallel with the DC link capacitor;
determining that the flying capacitor has reached a threshold voltage; and
in response to determining that the flying capacitor has reached the threshold voltage, switching off the first and fourth switches.

2. The method of claim 1, wherein the flying capacitor pre-charge sequence further comprises, in response to determining that the flying capacitor has reached the threshold voltage, switching off the first and fourth switches while the DC link capacitor remains connected between the first and second voltage source terminals.

3. The method of claim 1 or 2, wherein the first and second voltage source terminals are connected to an auxiliary power supply.

4. The method of any of the preceding claims, wherein the first and second voltage source terminals are wirelessly connected to a power supply of the vehicle assembly.

5. The method of claim 4, wherein the power supply of the vehicle assembly is a vehicle battery.

6. The method of any of the preceding claims, wherein the first switch is connected to the first voltage terminal, the fourth switch is connected to the second voltage source terminal, and the second and third switches are connected in series between the first and fourth switches.

7. The method of any of the preceding claims, wherein the flying capacitor pre-charge sequence further comprises: determining that the flying capacitor has reached the threshold voltage based on sensor data from one or more sensors.

8. The method of any of the preceding claims, wherein the ground assembly further comprises a plurality of switch legs, each switch leg of the plurality of switch legs comprising (1) a respective first, second, third, and fourth switch and (2) a respective flying capacitor.

9. The method of claim 8, wherein the flying capacitor pre-charge sequence further comprises:
switching on the respective first and fourth switches of each of the plurality of switch legs;
determining that the respective flying capacitors of each of the plurality of switch legs have reached the threshold voltage; and
in response to determining that each of the respective flying capacitors of the plurality of switch legs have reached the threshold voltage, switching off the respective first and fourth switches of each of the plurality of switch legs.

10. The method of any of the preceding claims, wherein the first, second, third, and fourth switches each comprise a metal oxide semiconductor field effect transistor.

11. A wireless power system for electric vehicle charging, the wireless power system comprising:
a vehicle assembly,
a ground assembly comprising:
a first switch leg comprising first, second, third, and fourth switches, wherein the first, second, third and fourth switches are connected in series between first and second voltage source terminals;
a flying capacitor, wherein a first terminal of the flying capacitor is connected at a first node between the first switch and the second switch and a second terminal of the flying capacitor is connected at a second node between the third switch and the fourth switch; and
a DC link capacitor connected in parallel to the first switch leg between the first and second voltage source terminals; and
a controller for controlling the ground assembly to execute a flying capacitor pre-charge sequence, wherein the controller is configured to:
switch on the first and fourth switches to connect the flying capacitor to the first and second voltage source terminals in parallel with the DC link capacitor;
determine that the flying capacitor has reached a threshold voltage; and
in response to determining that the flying capacitor has reached the threshold voltage, switch off the first and fourth switches while the DC link capacitor remains connected between the first and second voltage source terminals.

12. A vehicle assembly for a wireless power transfer system comprising:
a first switch leg comprising first, second, third, and fourth switches, wherein the first, second, third and fourth switches are connected in series between first and second voltage source terminals;
a flying capacitor, wherein a first terminal of the flying capacitor is connected at a first node between the first switch and the second switch and a second terminal of the flying capacitor is connected at a second node between the third switch and the fourth switch; and
a DC link capacitor connected in parallel to the first switch leg between the first and second voltage source terminals; and
a controller for controlling the vehicle assembly to execute a flying capacitor pre-charge sequence, wherein the controller is configured to:
switch on the first and fourth switches to connect the flying capacitor to the first and second voltage source terminals in parallel with the DC link capacitor;
determine that the flying capacitor has reached a threshold voltage; and
in response to determining that the flying capacitor has reached the threshold voltage, switch off the first and fourth switches while the DC link capacitor remains connected between the first and second voltage source terminals.

13. A ground assembly for a wireless power transfer system comprising:
a first switch leg comprising first, second, third, and fourth switches, wherein the first, second, third and fourth switches are connected in series between first and second voltage source terminals;
a flying capacitor, wherein a first terminal of the flying capacitor is connected at a first node between the first switch and the second switch and a second terminal of the flying capacitor is connected at a second node between the third switch and the fourth switch; and
a DC link capacitor connected in parallel to the first switch leg between the first and second voltage source terminals; and
a controller for controlling the ground assembly to execute a flying capacitor pre-charge sequence, wherein the controller is configured to:
switch on the first and fourth switches to connect the flying capacitor to the first and second voltage source terminals in parallel with the DC link capacitor;
determine that the flying capacitor has reached a threshold voltage; and
in response to determining that the flying capacitor has reached the threshold voltage, switch off the first and fourth switches while the DC link capacitor remains connected between the first and second voltage source terminals.

14. A vehicle comprising the vehicle assembly of claim 12.
